# EUROPÄISCHE PATENTSCHRIFT

(11) **EP 2 456 047 B1**
(45) Veröffentlichungstag und Bekanntmachung des Hinweises auf die Patenterteilung: **16.09.2015**
(21) Anmeldenummer: 10014824.6
(22) Anmeldetag: 22.11.2010
(51) Int. Cl.: H02K 1/18, H02K 5/15, H02K 5/24

(54) **Elektrische Maschine mit mehreren Momentenstützelementen**
Electric machine with multiple momentum support elements
Machine électrique dotée de plusieurs éléments d'appui des couples

(43) Veröffentlichungstag der Anmeldung: 23.05.2012
(73) Patentinhaber: Siemens Aktiengesellschaft, 80333 München (DE)
(72) Erfinder: Frohnapfel, Michael, 36037 Fulda (DE); Georg, Klaus, 97616 Salz (DE); Haschka, Markus Stephan, Dr., 90419 Nürnberg (DE); Waider, Sebastian, 36100 Petersberg (DE)

(56) Entgegenhaltungen:
- EP-A1- 0 860 932
- EP-A2- 1 489 726
- EP-A2- 1 729 399
- DE-A1-102005 050 772
- GB-A- 2 169 754

## Beschreibung

Die vorliegende Erfindung betrifft eine elektrische Maschine, die in oder an eine Halteeinrichtung (z.B. Maschinengestell) montierbar ist, mit einem Stator, der eine Achse aufweist, und einer Momentenstützeinrichtung zum Abstützen des Stators gegenüber der Halteeinrichtung zur Vermeidung von Drehbewegungen um die Achse.

Soll beispielsweise ein Torquemotor eine separat gelagerte Arbeitsmaschine ohne wellenseitige Kupplungsverbindung antreiben, tritt eine überbestimmte Lagerung auf. Eine Vermeidung einer derartigen überbestimmten Lagerung gelingt durch die Verwendung von Drehmomentstützen, die das Reaktionsmoment des Stators aufnehmen und in den Maschinenstuhl leiten. Der Stator ist sonst nur über die Motorlager mit der Maschine verbunden. Die Lager nehmen die statischen Kräfte des Motors auf. Die Momentenstütze nimmt lediglich das Gegenmoment auf, um zu verhindern, dass sich der Stator unter dem Einfluss dieses Gegenmoments beschleunigt.

Bisher wurden einarmige Momentenstützen eingesetzt, die eine geringe Steifigkeit in den drei translatorischen Achsen gewährleisten, aber für Rotationen deutlich steifer sind. An der Befestigung zwischen Momentenstütze und Maschinenstuhl wird also eine Kraft übertragen, deren Gegenkräfte schädigend in die Motorlager wirken. Vor allem das der Motorstütze nächstliegende Motorlager nimmt den größten Teil dieser Kraft auf. Außerdem besitzt diese Konstruktionsweise weitere Nachteile für den geregelten dynamischen Betrieb, denn auch Schwingungsformen, die keine reinen Torsionsschwingungen sind, werden auf diese Weise durch die Gegenkräfte angeregt.

Ein weiterer Nachteil der einarmigen Drehmomentstütze ist ihr mangelndes Potential, eine höhere Drehsteifigkeit zu erzielen. Finite-Elemente-Simulationen zeigen, dass sogar eine deale Versteifung einzelner Elemente (Federstab, Motorlager, Statorgehäuse) nur eine geringe Erhöhung der Torsionssteifigkeit bewirkt. Diese Eigenschaft lässt sich durch die Schwingform erklären, die bei einer einarmigen Drehmomentstütze auftritt. Im Resonanzfall schwingt nicht nur der starre Stator über den elastischen Federstab an der Momentenstütze, sondern auch beide Motorlager und die Motorwelle. Darüber hinaus ist sogar eine Verdrehung des Statorgehäuses feststellbar. Daher wirkt die effektiv wirksame Torsionssteifigkeit wie eine Hintereinanderschaltung mehrerer Federn, was insgesamt eine immer geringer werdende Steifigkeit bewirkt. Aus den Druckschriften EP 0 860 932 A1 und DE 10 2005 050 772 A1 ist eine gattungsgemäße elektrische Maschine mit einem Stator, der eine Achse aufweist, und einer Momentenstützeinrichtung zum Abstützen des Stators gegenüber einer Halteeinrichtung zur Vermeidung von Drehbewegungen um die Achse bekannt. Die Momentenstützeinrichtung weist ein Zwischenelement, zwei Haltestützelemente zum Abstützen gegenüber der Halteeinrichtung und zwei Statorstützelemente zum Abstützen gegenüber dem Stator auf. Die Haltestützelemente und die Statorstützelemente besitzen in Umfangsrichtung bezogen auf die Achse jeweils eine höhere Steifigkeit als in anderen Raumrichtungen.

Die Aufgabe der vorliegenden Erfindung besteht somit darin, eine elektrische Maschine bereitzustellen, bei der im Betrieb möglichst geringe Reaktionskräfte in die Motorlager eingeleitet werden.

Erfindungsgemäß wird diese Aufgabe gelöst durch eine elektrische Maschine nach Anspruch 1.

In vorteilhafter Weise ist es so möglich, dass durch die derart konstruierte Momentenstützeinrichtung keine zusätzliche zu hohe statorseitige Steifigkeit in den drei translatorischen Raumrichtungen bewirkt wird, denn diese würde bei einem unrunden Lauf der Welle Lagerschäden verursachen, da die Motorlager bzw. Lager der elektrischen Maschine große Gegenkräfte aufnehmen müssten. Insbesondere können die Haltestützelemente und die Statorstützelemente so konstruiert sein, dass sie eine sehr geringe Steifigkeit in den drei translatorischen Achsen und eine sehr hohe rotatorische Steifigkeit bezüglich der Drehachse des Motors aufweisen.

In einer Ausführungsform kann die elektrische Maschine ein Gehäuse aufweisen, wobei sich die Statorstützelemente über das Gehäuse an dem Stator abstützen. Damit kann der Stator mit einem Gehäuse umgeben sein (z. B. Motorgehäuse) und die Momentenstützeinrichtung stützt sich nicht direkt am Stator, sondern indirekt über das Gehäuse an dem Stator ab.

In einer alternativen Ausführungsform kann der Stator ein Lagerschild aufweisen, und die Statorstützelemente stützen sich direkt an dem Lagerschild ab. Damit kann die Erfindung auch für gehäuselose Motoren eingesetzt werden.

Speziell können die Statorstützelemente und die Haltestützelemente jeweils eine (rund-) stabförmige Gestalt aufweisen. Derartige Stäbe weisen in ihrer axialen Richtung eine sehr hohe Steifigkeit auf, während sie in jeder Achsquerrichtung eine geringere Steifigkeit aufweisen. Dabei bezieht sich die Steifigkeit, wie im ganzen Dokument auch, bei einem Stützelement auf einen Punkt des Stützelements, an dem es an dem Zwischenelement befestigt ist, gegenüber einem Punkt des Stützelements, an dem es mit dem Stator, dem Gehäuse oder der Halteeinrichtung verbunden ist (Biegesteifigkeit oder Drucksteifigkeit).

Alternativ können die Statorstützelemente und die Haltestützelemente jeweils einen U- oder V-förmigen Querschnitt aufweisen. Auch hier ergibt sich senkrecht zum Querschnitt in der Regel eine wesentlich höhere Steifigkeit (Drucksteifigkeit) als in einer dazu senkrechten Richtung (Biegesteifigkeit).

Weiterhin können die Statorstützelemente und die Haltestützelemente in Umfangsrichtung im oder gegen den Uhrzeigersinn eine höhere Steifigkeit besitzen als in allen übrigen Richtungen. Damit kann in Umfangsrichtung eine sehr hohe Steifigkeit gewährleistet werden, wohingegen in allen anderen Richtungen insbesondere hinsichtlich translatorischer Bewegungen des Stators gegenüber der Halteeinrichtung eine geringere Steifigkeit erzielt werden kann.

Vorzugsweise sind die Statorstützelemente zueinander und die Haltestützelemente zueinander jeweils symmetrisch bezüglich der Achse angeordnet. Damit kann eine höhere Torsionssteifigkeit als bei einarmigen Momentenstützen erreicht werden.

Die Statorstützelemente können außerdem auf einer ersten Ebene durch die Achse und die Haltestützelemente auf einer zweiten Ebene durch die Achse angeordnet sein, wobei die erste Ebene senkrecht zur zweiten Ebene steht. Damit kann, wenn sämtliche Stützelemente baugleich sind, in den beiden Ebenen eine gleiche Steifigkeit bzw. Flexibilität der Stützelemente erreicht werden.

In einer bevorzugten Ausführungsform ist das Zwischenelement ringförmig ausgebildet. Es kann somit insbesondere Torsionskräfte mit hoher Steifigkeit übertragen, und außerdem kann die Welle der elektrischen Maschine, z. B. die Rotorwelle, durch das Zwischenelement nach außen ragen.

Die vorliegende Erfindung wird nun anhand der beigefügten Zeichnungen näher erläutert, in denen zeigen:
- FIG 1: eine Prinzipskizze eines Stützelements mit rundem U-Profil;
- FIG 2: eine Prinzipskizze eines Stützelements mit rechteckigem U-Profil;
- FIG 3: eine Realisierungsform des rechteckigen U-Profils gemäß FIG 2;
- FIG 4: eine Prinzipskizze eines stabförmigen Stützelements;
- FIG 5: einen Motor mit einer Momentenstützeinrichtung basierend auf Stützelementen gemäß FIG 3;
- FIG 6: einen Motor mit einer Momentenstützeinrichtung basierend auf Stützelementen gemäß FIG 4; und
- FIG 7: einen Motor mit einer anderen Motorstützeinrichtung basierend auf Stützelementen gemäß FIG 4.

Die nachfolgend näher geschilderten Ausführungsformen stellen bevorzugte Ausführungsbeispiele der vorliegenden Erfindung dar.

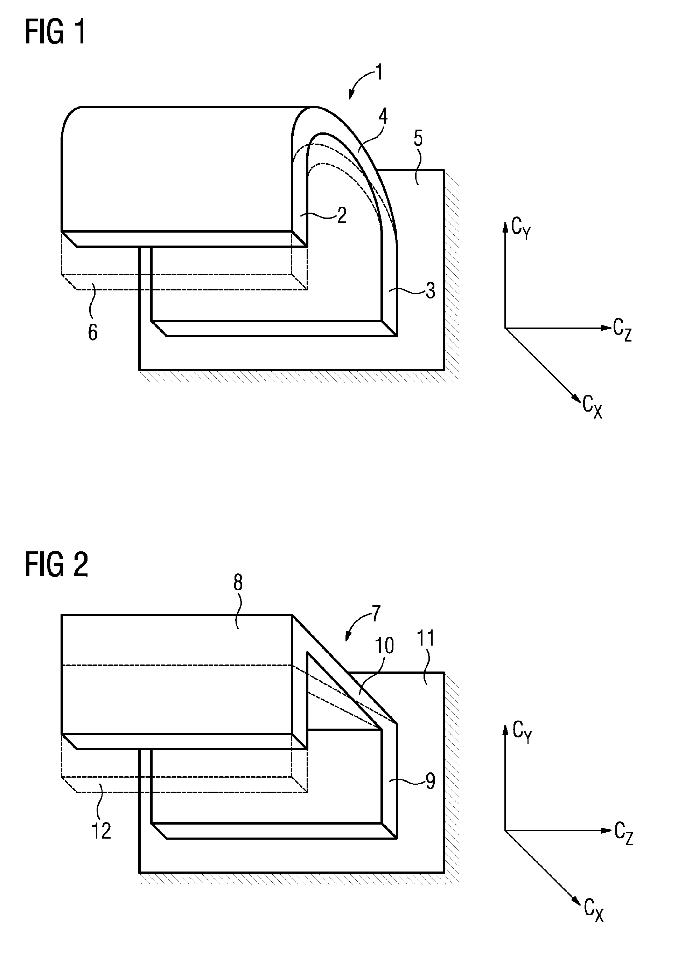

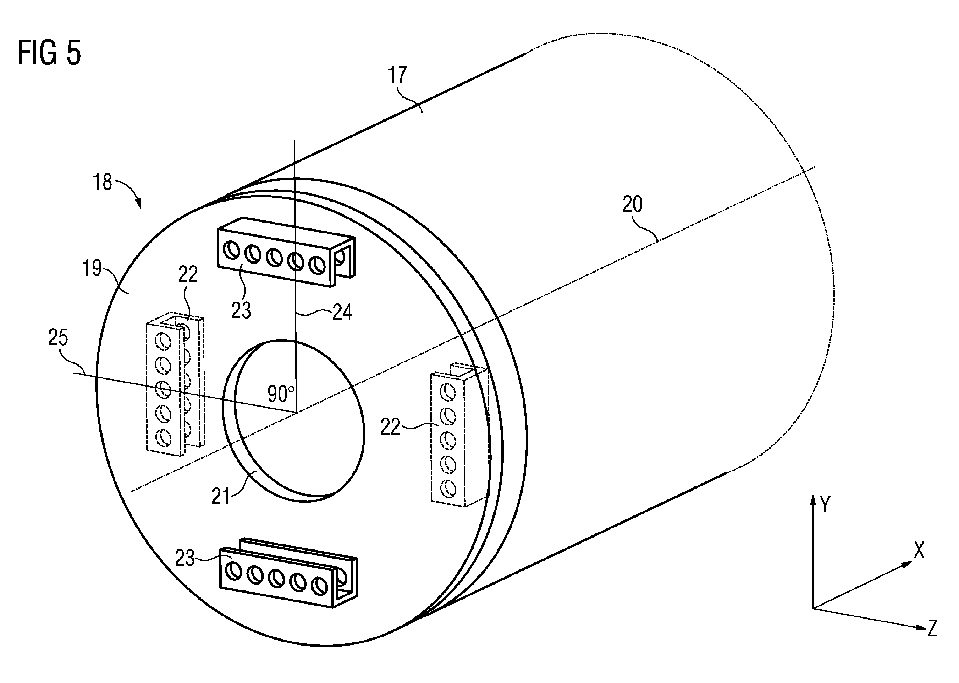

Die vorliegende Erfindung basiert auf dem Gedanken, eine Momentenstützeinrichtung so zu konstruieren, dass eine möglichst hohe rotatorische Steifigkeit um die Drehachse des Motors und eine möglichst geringe translatorische Steifigkeit gegenüber dem Stator auftritt. Um das entsprechende Ziel zu erreichen, eignen sich Konstruktionselemente, deren Steifigkeit Cₓ, C_{y}, C_{z} sich in den drei Raumachsen x, y, z (hier auch Raumrichtungen genannt) stark unterscheidet. Idealerweise ist das verwendete Stützelement der Momentenstützeinrichtung in zwei Richtungen flexibel und in einer Raumachse steif. Ein mögliches Stützelement 1 ist in FIG 1 dargestellt. Das Stützelement 1 besitzt einen U-förmigen Querschnitt und insbesondere zwei Schenkel 2 und 3, die mit einem runden Abschnitt 4 verbunden sind. Jeder der beiden Schenkel 2, 3 ist entweder mit einem abgestützten oder einen abstützenden Element fest verbunden. In FIG 1 ist nur die Befestigung des Schenkels 3 beispielsweise an dem abgestützten Element 5 dargestellt. Dieses abgestützte Element 5 kann beispielsweise das in FIG 5 dargestellte Zwischenelement sein.

In FIG 1 ist das Stützelement 1 in einem ausgelenkten bzw. gebogenen Zustand dargestellt. Gestrichelt ist der kraftfreie Zustand 6 dargestellt. In dem Beispiel ist somit der Schenkel 2 in y-Richtung gegenüber dem Schenkel 3 verschoben, wobei die beiden Schenkel 2 und 3 jeweils in einer y-z-Ebene verlaufen.

Beispielsweise gilt hinsichtlich der Steifigkeiten Cₓ, C_{y} und C_{z} des Stützelements 1 von FIG 1: Cₓ << C_{z} und C_{y} << C_{z}. Das Stützelement ist somit insbesondere in den Richtungen x und y (natürlich auch in deren Gegenrichtung) wesentlich flexibler als in der Richtung z.

In FIG 2 ist ebenfalls ein U-förmiges Stützelement 7 dargestellt. Es besitzt einen rechteckigen Querschnitt, was bedeutet, dass seine beiden Schenkel 8 und 9 durch einen senkrecht dazu verlaufenden Abschnitt 10 miteinander verbunden sind (kräftefreier Zustand vorausgesetzt). In diesem Beispiel gilt insbesondere: C_{y} << C_{z}. Wie in dem Beispiel von FIG 1 ist auch hier der Schenkel 9 an einem Abschnitt 11 eines abgestützten Elements befestigt und der Schenkel 8 ist in y-Richtung gegenüber dem kräftefreien Zustand 12 (gestrichelt gezeichnet) versetzt. Dies bedeutet, dass das Stützelement 7 Schwingungen vorzugsweise in y-Richtung kompensieren kann.

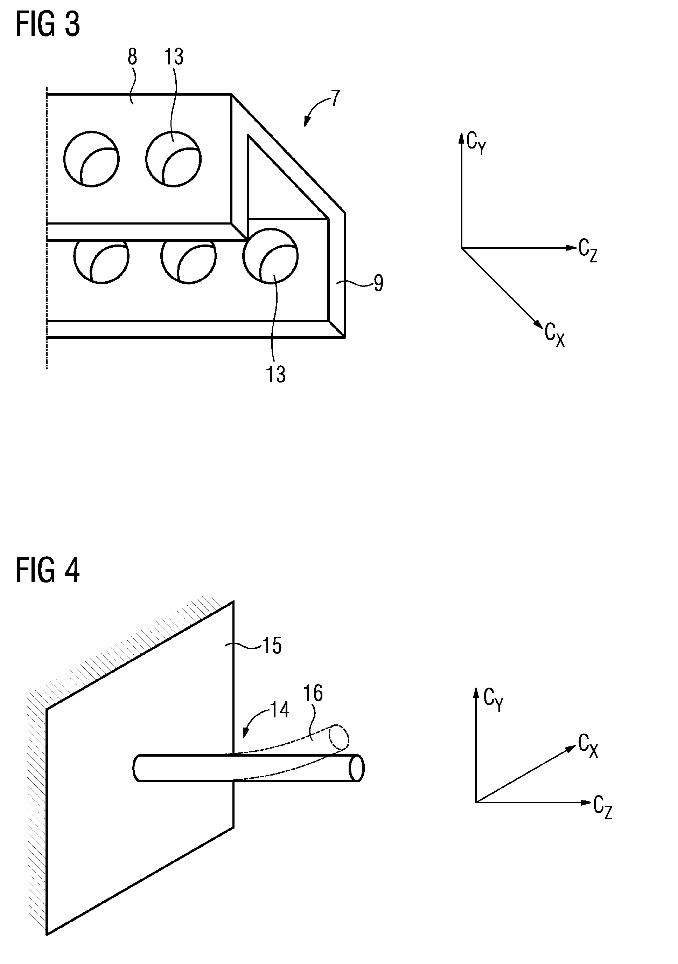

FIG 3 zeigt ein konkretes Beispiel eines derartigen Stützelements 7 mit rechteckigem U-Profil. Das "Profil" erstreckt sich in gewünschter Länge in z-Richtung. In den beiden Schenkeln 8 und 9 besitzt es Bohrungen 13, zur Befestigung an dem abstützenden bzw. dem abgestützten Element.

Ein weiteres Stützelement 14, das sich in den drei Achsen x, y und z sehr stark in seiner Steifigkeit unterscheidet, ist in FIG 4 wiedergegeben. Es handelt sich hier um einen Stab, der an seinen Enden einerseits in das abstützende Element und andererseits in das abgestützte Element eingespannt wird. Im Beispiel von FIG 4 ist wiederum beispielsweise ein Abschnitt 15 des abgestützten Elements dargestellt. Bei dem Stab (insbesondere Rundstab) handelt es sich also um einen vorzugsweise einseitig eingespannten Biegestab, der sich biegen lässt, so dass sein freies Ende bei Krafteinwirkung beispielsweise die Position 16 einnimmt (gestrichelt gezeichnet). Die Biegesteifigkeit Cₓ, C_{y} in den Richtungen bzw. auf den Achsen x und y ist wesentlich geringer als die Drucksteifigkeit C_{z} in z-Richtung. D. h.: Cₓ << C_{z} und C_{y} << C_{z}. Der Biegestab ist also in Biegerichtung bei ausreichender Länge flexibel und in Zugrichtung bzw. Druckrichtung steif.

Bei der (Dreh-) Momentenstützeinrichtung sind die verwendeten Stützelemente so im Raum anzuordnen, dass für alle Verlagerungen des Motorgehäuses bzw. Stators in translatorischen Achsrichtungen ihre hohe Flexibilität genutzt werden kann, und bei rotatorischer Belastung durch das Drehmoment die hohe Steifigkeit zum Tragen kommt. Dies geschieht beispielsweise durch die Anordnung von insgesamt vier Stützelementen in zwei um 90° zueinander gedrehten Ebenen gemäß den Beispielen von FIG 5 bis FIG 7.

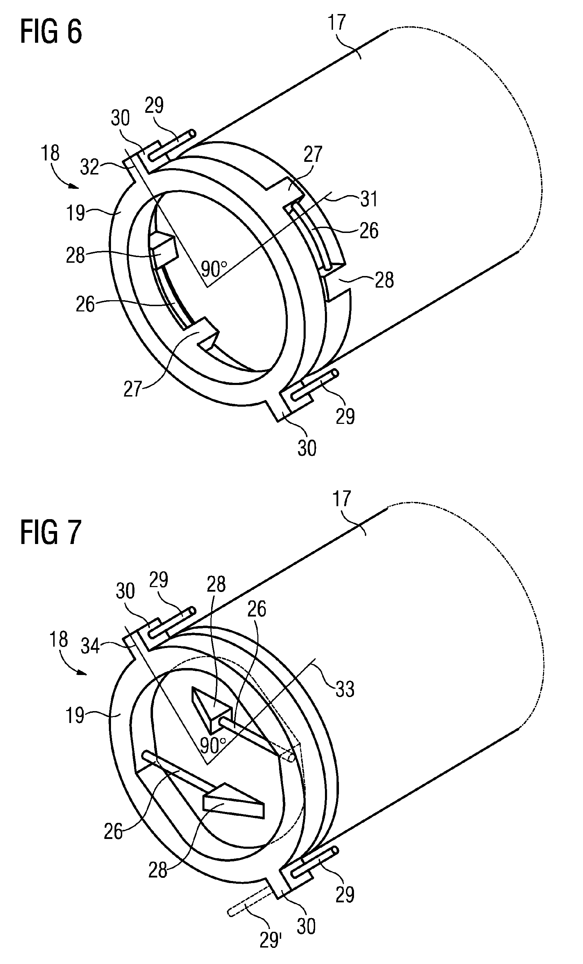

Grundsätzlich sind mehrere Konstruktionsprinzipien denkbar. Beispielsweise kann eine Anordnung der Stützelemente in zwei axial voneinander getrennten parallelen Ebenen erfolgen (vgl. FIG 5 und 6). Darüber hinaus kann auch eine Anordnung der Stützelemente in einer einzigen Ebene teilweise radial übereinander erfolgen. Darüber hinaus kann die Motorstützeinrichtung axial vor dem Motor bzw. der elektrischen Maschine oder aber auch beispielsweise radial über dem Motor angeordnet sein.

In dem Beispiel von FIG 5 weist die dort dargestellte elektrische Maschine einen Stator 17 und eine Momentenstützeinrichtung 18 auf. Die Momentenstützeinrichtung 18 besitzt ein Zwischenelement 19, das hier ringförmig ausgebildet und koaxial bezüglich der Achse 20 des Stators angeordnet ist. Falls sich in dem Stator 17 ein Rotor befindet, kann seine Welle durch die Öffnung 21 des zwischenelements 19 herausragen.

In einer ersten Ebene parallel zu dem Zwischenelement 19 sind Statorstützelemente 22 angeordnet. Diese erste Ebene befindet sich zwischen dem Zwischenelement 19 und dem Stator 17. Die Statorstützelemente 22 verbinden den Stator 17 und das Zwischenelement 19.

In einer ebenfalls zur Drehachse 20 senkrecht stehenden zweiten Ebene vor dem Zwischenelement 19, d.h. auf der dem Stator 17 abgewandten Seite des zwischenelements 19, befinden sich Haltestützelemente 23. (Wenn im vorliegenden Dokument davon gesprochen wird, dass sich Elemente auf einer gleichen Ebene befinden, bedeutet dies, dass sich ihre Schwerpunkte auf einer Ebene befinden.) Die Haltestützelemente 23 sind an dem Zwischenelement axial gegenüberstehend (ebenso wie die Statorstützelemente 22) befestigt. Andererseits werden die Haltestützelemente 23 an einer in FIG 5 nicht dargestellten Halteeinrichtung befestigt. Dabei kann es sich beispielsweise um das Gestell einer Maschine oder dergleichen handeln.

Die Momentenstützeinrichtung umfasst hier also vier Stützelemente 22, 23, die in zwei um 90° zueinander verdrehten Ebenen senkrecht zur Achse angeordnet sind. Die beiden Ebenen liegen axial vor und hinter dem zwischenelement 19 und sind um 90° "gedreht", was die beiden Linien 24 und 25 andeuten. Dies bedeutet, dass die Schwerpunkte der Statorstützelemente 22 auf einer ersten Ebene durch die Achse 20 und die beiden Haltestützelemente 23 in einer zweiten Ebene, die ebenfalls durch die Achse 20 verläuft, angeordnet sind, wobei die erste Ebene und die zweite Ebene senkrecht aufeinander stehen.

Diese spezielle Anordnung der Stützelemente 22, 23 hat zur Folge, dass Schwingungen in z-Richtung hier durch die Statorstützelemente 22 entkoppelt werden (vgl. FIG 2) und Schwingungen in y-Richtung durch die Haltestützelemente 23. Hingegen übertragen die Statorstützelemente 22 in y-Richtung und die Haltestützelemente 23 in z-Richtung aufgrund ihrer diesbezüglichen hohen Steifigkeit nahezu alle Schwingungen ungedämpft.

In FIG 6 ist eine Variante einer erfindungsgemäßen elektrischen Maschine dargestellt. Hier ist axial vor dem Stator 17 eine Momentenstützeinrichtung 18 angeordntet, die Stützelemente gemäß FIG 4, nämlich stabförmige Stützelemente, aufweist. Das Zwischenelement 19 ist auch hier ringförmig. In einer Ebene axial zwischen dem Stator 17 und dem Zwischenelement 19 befinden sich die stabförmigen Statorstützelemente 26. Sie stützt sich einerseits an Vorsprüngen 27 des Zwischenelements 19 und andererseits an Vorsprüngen 28 des Stators 17 ab. Im Wesentlichen erstrecken sich die Statorstützelemente 26 in Umfangsrichtung des Stators 27 bzw. des ringförmigen Zwischenelements 19.

In einer zweiten Ebene, in der sich hier auch das Zwischenelement 19 erstreckt, befinden sich die Haltestützelemente 29, die hier ebenfalls stabförmig ausgebildet sind. Sie stützen sich jeweils an Vorsprüngen 30 ab, welche hier radial von dem Zwischenelement 19 nach außen ragen. Die Vorsprünge 27 und 28 erstrecken sich hingegen, was den jeweiligen zentralen Abstützpunkt betrifft, im Wesentlichen in axialer Richtung, so dass die jeweiligen Statorstützelemente 26 innerhalb des Durchmessers des ringförmigen Zwischenelements 19 verlaufen. Demgegenüber befinden sich die Haltestützelemente 29 außerhalb des Umfangs des Zwischenelements 19. Die beiden Ebenen, in denen sich die Statorstützelemente 26 einerseits und die Haltestützelemente 29 andererseits befinden, sind wie in dem Beispiel von FIG 5 um 90° gedreht, was die Linien 31 und 32 andeuten.

In FIG 7 ist eine weitere Variante einer elektrischen Maschine mit Stator 17 und Momentenstützeinrichtung 18 dargestellt. Das Zwischenelement 19 ist auch hier ringförmig ausgestaltet und befindet sich axial vor dem Stator 17. Ebenso befinden sich stabförmige Haltestützelemente 29 an Vorsprüngen 30, die von dem Zwischenelement 19 radial nach außen ragen. Auf der gleichen Ebene senkrecht zur Achse des Stators 17 befinden sich die Statorstützelemente 26. Sie befinden sich hier radial innerhalb des zwischenelements 19. Betrachtet man auch hier eine erste Ebene durch die Achse des Stators 17 und die Schwerpunkte der Statorstützelemente 26 sowie eine zweite Ebene durch die Achse des Stators 17 und die Schwerpunkte der Haltestützelemente 29, so stehen auch diese beiden Ebenen 90° aufeinander, was die Linien 33 und 34 andeuten. Die Vorsprünge 28 des Stators 17 ragen hier in das Innere des Zwischenelements 19, so dass die gesamte elektrische Maschine hier axial kürzer gebaut werden kann als in dem Beispiel von FIG 6.

Eines der Haltestützelemente 29 ragt hier im Uhrzeigersinn und das andere Haltestützelement 29 gegen den Uhrzeigersinn aus dem jeweiligen Vorsprung 30. Dies bedeutet, dass das eine Haltestützelement 29 bei einer Drehmomentübertragung auf Zug und das andere auf Druck beansprucht wird. Alternativ können auch beide Haltestützelemente in gleicher Richtung aus den jeweiligen Vorsprüngen 30 ragen (vgl. gestrichelt eingezeichnetes Haltestützelement 29').

Das zwischenelement 19 sollte zur Anhebung seiner Eigenfrequenz möglichst leicht ausgeführt werden. Im Zielkonflikt dazu sollte es jedoch auch möglichst steif sein, um die Verringerung der Torsionssteifigkeit als dritte Feder in der Reihenschaltung der Torsionsfedern zu vermeiden.

Die durch die oben vorgeschlagenen Bauweisen ausgeführten Drehmomentstützen (d.h. Momentenstützeinrichtungen) besitzen eine geringe Steifigkeit in den drei translatorischen Raumachsen, was die Belastung der Motorlager reduziert. Ein nicht ideal fluchtender Anbau einer Welle, die von dem Motor angetrieben werden soll, hat immer zusätzliche Lagerkräfte zur Folge, aber da die Steifigkeit in den translatorischen Achsen sehr gering ist, folgt daraus, dass auch die dazu korrespondierende Rückstellkraft deutlich geringer ist, da der Stator dieser nachgeben kann.

Ein weiterer Vorteil ist die symmetrische Bauweise der Drehmomentstütze, die dazu führt, dass durch die übertragenen Kräfte in der Momentenstütze keine Schwingformen/Resonanzen der Maschine angeregt werden, die nicht zu den unvermeidlichen, reinen Torsionsschwingungen gehören. Diese Eigenschaft ist für eine hochdynamische Regelung ein bedeutender Vorteil, denn Tilger/Resonanz-Paare im Frequenzgang der Drehzahlregelstrecke (systemtheoretische Übertragungsfunktion, Motormoment zur Drehzahl im Frequenzbereich). Begrenzen die maximal mögliche Kreisverstärkung und verursachen unter ungünstigen Bedingungen sogar einen instabilen Regelkreis. Der Frequenzgang der Drehzahlregelstrecke eines über die oben dargestellte Momentenstütze angebundenen Motors zeigt nur reine Torsionsschwingungen. Die übrigen Drehschwingungen stammen von der angetriebenen Welle und gegebenenfalls von der Last. Bei einer herkömmlichen Konstruktionsweise, bestehend aus einer einarmigen Stütze, würden noch weitere Resonanzen im Streckenverhalten erschwerend zusätzlich auftreten.

Durch eine symmetrische Bauweise der Momentenstützeinrichtung ist auch die Torsionssteifigkeit höher als bei der klassischen einarmigen Lösung. Da in den Motorlagern keine Reaktionskräfte auftreten, wirkt im Torsionsschwingungs-Resonanzfall das Lager nicht als zusätzliche Feder und verringert so nicht die Steifigkeit.

Ein weiterer Vorteil gegenüber der Lösung mit nur einer einarmigen Drehmomentstütze ist, dass wegen der symmetrischen Bauweise ein auftretendes Motormoment keine Reaktionskräfte in den Motorlagern verursacht. Jeweils gegenüberliegende Federstäbe an der Momentenstütze heben sich also kräftemäßig auf.

Eine translatorische Verschiebung des Stators zur Drehachse der Arbeitsmaschine bewirkt beim bisherigen, einarmigen Konzept eine rotatorische Relativbewegung von Stator zu Rotor. Diese Rotation äußert sich in einem (eventuell periodisch auftretenden) Winkelfehler/Rotorlageabweichung und damit als weitere Störgröße in der Regelstrecke.

## Patentansprüche

1. Elektrische Maschine, die in oder an eine Halteeinrichtung montierbar ist, mit
- einem Stator (17), der eine Achse (20) aufweist und
- einer Momentenstützeinrichtung (18) zum Abstützen des Stators gegenüber der Halteeinrichtung zur Vermeidung von Drehbewegungen um die Achse (20), wobei
- die Momentenstützeinrichtung (18) ein Zwischenelement (19), zwei Haltestützelemente (23,29) zum Abstützen gegenüber der Halteeinrichtung und zwei Statorstützelemente (22,26) zum Abstützen gegenüber dem Stator (17) aufweist, wobei
- die Haltestützelemente (23,29) und die Statorstützelemente (22,26) in Umfangsrichtung bezogen auf die Achse (20) jeweils eine höhere Steifigkeit besitzen als in anderen Raumrichtungen,
**dadurch gekennzeichnet, dass**
- das Zwischenelement ringförmig ausgebildet und koaxial bezüglich der Achse (20) angeordnet ist,
- die Statorstützelemente (22, 26) in einer ersten Ebene durch die Achse (20) und die Haltestützelemente (23, 29) in einer zur ersten Ebene senkrecht stehenden zweiten Ebene durch die Achse (20) angeordnet sind, und
- die Statorstützelemente (22, 26) und die Haltestützelemente (23, 29) U-förmig oder stabförmig gebildet sind.

2. Elektrische Maschine nach Anspruch 1, die ein Gehäuse aufweist, wobei sich die Statorstützelemente (22,26) über das Gehäuse an dem Stator (17) abstützen.

3. Elektrische Maschine nach Anspruch 1, wobei der Stator (17) ein Lagerschild aufweist, und die Statorstützelemente (22, 26) sich direkt an dem Lagerschild abstützen.

4. Elektrische Maschine nach einem der vorhergehenden Ansprüche, wobei die Statorstützelemente (22,26) und die Haltestützelemente (23,28) in Umfangsrichtung im und gegen den Urzeigersinn eine höhere Steifigkeit besitzen als in allen übrigen Richtungen.

5. Elektrische Maschine nach einem der vorhergehenden Ansprüche, wobei die Statorstützelemente (22,26) zueinander und die Haltestützelemente (23,29) zueinander jeweils symmetrisch bezüglich der Achse (20) angeordnet sind.

6. Elektrische Maschine nach einem der vorhergehenden Ansprüche, wobei das Zwischenelement (19) ringförmig ausgebildet ist.

## Claims

1. Electric machine that can be mounted in or on a retaining device, having
- a stator (17), which has an axis (20), and
- a torque-support device (18) for supporting the stator against the retaining device to prevent turning movements around the axis (20), wherein
- the torque-support device (18) has an intermediate element (19), two holding support elements (23, 29) for providing support against the retaining device, and two stator support elements (22, 26) for providing support against the stator (17), wherein
- the holding support elements (23, 29) and stator support elements (22, 26) each possess greater rigidity in a circumferential direction referred to the axis (20) than in other spatial directions,
**characterised in that**
- the intermediate element is designed to be annular in shape and is arranged coaxially in respect of the axis (20),
- the stator support elements (22, 26) are arranged on a first plane through the axis (20) and the holding support elements (23, 29) on a second plane through the axis (20), with the first plane being perpendicular to the second, and
- the stator support elements (22, 26) and holding support elements (23, 29) are U-shaped or rod-shaped.

2. Electric machine according to claim 1, which has a housing, wherein the stator support elements (22, 26) are supported against the stator (17) via the housing.

3. Electric machine according to claim 1, wherein the stator (17) has an end shield, and the stator support elements (22, 26) are supported directly against the end shield.

4. Electric machine according to one of the preceding claims, wherein the stator support elements (22, 26) and holding support elements (23, 28) possess a greater rigidity in the circumferential direction clockwise and anticlockwise than in any other direction.

5. Electric machine according to one of the preceding claims, wherein the stator support elements (22, 26) on the one hand and the holding support elements (23, 29) on the other are in each case arranged mutually symmetrically with reference to the axis (20).

6. Electric machine according to one of the preceding claims, wherein the intermediate element (19) is designed to be annular in shape.

## Revendications

1. Machine électrique qui peut être montée dans ou sur un dispositif de maintien et qui comprend :
- un stator ( 17 ) qui a un axe ( 20 ) et
- un dispositif ( 18 ) d'appui de couple, pour l'appui du stator par rapport au dispositif de maintien afin d'empêcher des mouvements de rotation autour de l'axe ( 20 ), dans laquelle
- le dispositif ( 18 ) d'appui de couple a un élément ( 19 ) intermédiaire, des éléments ( 23, 29 ) d'appui de maintien pour l'appui par rapport au dispositif de maintien et deux éléments ( 22, 26 ) d'appui de stator pour l'appui par rapport au stator ( 17 ), dans laquelle
- les éléments ( 23, 29 ) d'appui de maintien et les éléments ( 22, 26 ) d'appui de stator ont, dans la direction périphérique rapportée à l'axe ( 20 ), respectivement une rigidité plus grande que dans d'autres directions de l'espace, **caractérisée en ce que**
- l'élément intermédiaire est constitué en forme d'anneau et est disposé coaxialement par rapport à l'axe ( 20 ),
- les éléments ( 22, 26 ) d'appui de stator sont disposés dans un premier plan passant par l' axe ( 20 ) et les éléments ( 23, 29 ) d'appui de maintien dans un deuxième plan passant par l'axe et perpendiculaire au premier plan et
- les éléments ( 22, 26 ) d'appui de stator et les éléments ( 23, 29 ) d'appui de maintien sont conformés en forme de U ou en forme de barre.

2. Machine électrique suivant la revendication 1, qui a une enveloppe, les éléments ( 22, 26 ) d'appui de stator s'appuyant sur le stator ( 17 ) par l'intermédiaire de l'enveloppe.

3. Machine électrique suivant la revendication 1, dans lequel le stator ( 17 ) a un flasque et les éléments ( 22, 26 ) d'appui de stator s'appuient directement sur le flasque.

4. Machine électrique suivant l'une des revendications précédentes, dans laquelle les éléments ( 22, 26 ) d'appui de stator et les éléments ( 23, 28 ) d'appui de maintien ont, dans la direction périphérique dans le sens des aiguilles d'une montre et dans le sens inverse des aiguilles d'une montre, une rigidité plus grande que dans toutes les autres directions.

5. Machine électrique suivant l'une des revendications précédentes, dans laquelle les éléments ( 22, 26 ) d'appui de stator sont disposés les uns par rapport aux autres et les éléments ( 23, 29 ) d'appui de maintien sont disposés les uns par rapport aux autres respectivement symétriquement par rapport à l' axe ( 20 ).

6. Machine électrique suivant l'une des revendications précédentes dans laquelle l'élément ( 19 ) intermédiaire est constitué en forme d'anneau.
